# EUROPEAN PATENT APPLICATION

(11) **EP 3 751 488 A1**
(43) Date of publication of application: **16.12.2020**
(21) Application number: 19180178.6
(22) Date of filing: 14.06.2019
(51) Int. Cl.: G06Q 20/18, G06Q 10/00, G06Q 20/20, G06Q 20/32, G06Q 20/40, G06Q 40/00, G06Q 50/06, G06Q 20/08

(54) **MANAGING PURCHASE INFORMATION IN A VEHICLE**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); ZHENG, Yijun, 42668 VÄSTRA FRÖLUNDA (SE)
(74) Representative: Zacco Sweden AB

(57) **Abstract**

A method for payment of purchases in a vehicle is disclosed. The method comprises reading (103), by an image sensor arranged on the vehicle, a data code at a given purchase location, which data code is associated to purchase information for the purchase location, and presenting (104) the purchase information for a vehicle user, via an application interface, for selection of a purchase in response to reading the data code.

Corresponding computer program product, arrangement and system are also disclosed.

## Description

### TECHNICAL FIELD

The present disclosure relates generally to the field of managing purchase information in a vehicle. More particularly, it relates to detection and selection of purchase information in a vehicle.

### BACKGROUND

It is known that vehicle users have to step out of the vehicle for payment of purchases of e.g. parking tickets or vehicle fuel in a machine.

It is also known that vehicle users have to step out of the vehicle for validation of parking tickets in a machine for passing.

A drawback of known methods for payment of purchases is that is inconvenient and non-efficient time wise.

Therefore, there is a need for alternative approaches to payment of purchases.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to payment of purchases.

According to a first aspect, this is achieved by a method for payment of purchases in a vehicle.

The method comprises reading, by an image sensor arranged on the vehicle, a data code at a given purchase location, which data code is associated to purchase information for the purchase location.

The method further comprises presenting the purchase information for a vehicle user, via an application interface, for selection of a purchase in response to reading the data code.

An advantage of some embodiments is that a method for payment of purchases in a vehicle is provided.

Another advantage of some embodiments is that the method for payment of purchases in a vehicle provides a convenient and efficient payment method.

In some embodiments, the method further comprises receiving, via the application interface, a selected purchase from the purchase information.

An advantage of some embodiments is that the purchase information may managed by the vehicle user in a user-friendly manner.

In some embodiments, the method further comprises identifying the vehicle for the purchase location so that a transaction may be commenced for the selected purchase.

An advantage of some embodiments is that the vehicle may be identified as a unique vehicle.

In some embodiments, the method further comprises detecting a vehicle speed, and scanning, by the image sensor, an environment for the data code when the detected vehicle speed is lower than a set threshold.

An advantage of some embodiments is that the image sensor is activated when the likelihood of scanning a data code is possible by the image sensor and thereby optimizing the time the image sensor is active for scanning.

In some embodiments, the method further comprises determining, via a geolocation system, that the vehicle approaches a geographic area of the purchase location, and scanning, by the image sensor, the environment for the data code when the vehicle enters the geographic area of the purchase location.

An advantage of some embodiments is that the image sensor is activated when the geographic area comprising the environment with at least one data code is determined and thereby optimizing the time the image sensor is active for scanning.

In some embodiments, the method further comprises receiving, via the application interface, a confirmation of the commenced transaction.

An advantage of some embodiments is that the vehicle user receives a confirmation of the commenced transaction so that no unintentional purchase is completed without the vehicle user's confirmation.

In some embodiments, the application interface comprises an application interface for a user application in a mobile communication device or an application interface for a user application in the vehicle.

An advantage of some embodiments is that a user specific application may be operated from a plurality of platforms e.g. on a smart phone or via a HMI of the vehicle providing a high degree of flexibility for the vehicle user.

In some embodiments, the image sensor comprises a camera sensor or a laser scanner.

An advantage of some embodiments is that the image sensor is capable of scanning a plurality data code types.

In some embodiments, the data code comprises a two-dimensional, 2D, data matrix, a one-dimensional, 1D, data matrix, a bar code or a Quick Response, QR, code.

An advantage of some embodiments is that the data code may be implemented in variety of data code types depending on the type of environment the data code is to be arranged in.

In some embodiments, the purchase comprises a purchase for any one of parking, gas, and toll charges.

An advantage of some embodiments is that a plurality of typical vehicle purchase types may be performed.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an arrangement for payment of purchases in a vehicle.

The arrangement comprises a memory comprising executable instructions, one or more processors configured to communicate with the memory wherein the one or more processors are configured to cause the arrangement to read, by an image sensor arranged on the vehicle, a data code at a given purchase location, which data code is associated to purchase information for the purchase location.

The one or more processors are further configured to cause the arrangement to present the purchase information for a vehicle user, via an application interface, for selection of a purchase in response to reading the data code.

An advantage of some embodiments is that an arrangement for payment of purchases in a vehicle is provided.

Another advantage of some embodiments is that the arrangement for payment of purchases in a vehicle provides convenient and efficient payment.

In some embodiments, the one or more processors are configured to further cause the arrangement to receive, via the application interface, a selected purchase from the purchase information.

An advantage of some embodiments is that the purchase information may managed by the vehicle user in a user-friendly manner.

In some embodiments, the one or more processors are configured to further cause the arrangement to identify the vehicle for the purchase location so that a transaction may be commenced for the selected purchase.

An advantage of some embodiments is that the vehicle may be identified as a unique vehicle.

In some embodiments, the one or more processors are configured to further cause the arrangement to detect a vehicle speed, and scan, by the image sensor, an environment for the data code when the detected vehicle speed is lower than a set threshold.

An advantage of some embodiments is that the image sensor is activated when the likelihood of scanning a data code is possible by the image sensor and thereby optimizing the time the image sensor is active for scanning.

In some embodiments, the one or more processors are configured to further cause the arrangement to determine, via a geolocation system, that the vehicle approaches a geographic area of the purchase location, and scan, by the image sensor, the environment for the data code when the vehicle enters the geographic area of the purchase location.

An advantage of some embodiments is that the image sensor is activated when the geographic area comprising the environment with at least one data code is determined and thereby optimizing the time the image sensor is active for scanning.

In some embodiments, the one or more processors are configured to further cause the arrangement to receive, via the application interface, a confirmation of the commenced transaction.

An advantage of some embodiments is that the vehicle user receives a confirmation of the commenced transaction so that no unintentional purchase is completed without the vehicle user's confirmation.

A fourth aspect is a vehicle comprising the arrangement according to the third aspect.

A fifth aspect is a system for payment of purchases in a vehicle.

The system comprises a reading module configured to read, by an image sensor arranged on the vehicle, a data code at a given purchase location, which data code is associated to purchase information for the purchase location.

The system further comprises a presenting module configured to present the purchase information for a vehicle user, via an application interface, for selection of a purchase in response to reading the data code.

An advantage of some embodiments is that a system for payment of purchases in a vehicle is provided.

Another advantage of some embodiments is that the system for payment of purchases in a vehicle provides convenient and efficient payment.

In some embodiments, the system further comprises a receiving module configured to receive, via the application interface, a selected purchase from the purchase information.

An advantage of some embodiments is that the purchase information may managed by the vehicle user in a user-friendly manner.

In some embodiments, the system further comprises an identifying module configured to identify the vehicle for the purchase location so that a transaction may be commenced for the selected purchase.

An advantage of some embodiments is that the vehicle may be identified as a unique vehicle.

In some embodiments, the system further comprises a detecting module configured to detect a vehicle speed, and a scanning module configured to scan, by the image sensor, an environment for the data code when the detected vehicle speed is lower than a set threshold.

An advantage of some embodiments is that the image sensor is activated when the likelihood of scanning a data code is possible by the image sensor and thereby optimizing the time the image sensor is active for scanning.

In some embodiments, the system further comprises a determining module configured to determine, via a geolocation system, that the vehicle approaches a geographic area of the purchase location, and a scanning module configured to scan, by the image sensor, the environment for the data code when the vehicle enters the geographic area of the purchase location.

An advantage of some embodiments is that the image sensor is activated when the geographic area comprising the environment with at least one data code is determined and thereby optimizing the time the image sensor is active for scanning.

In some embodiments, the system further comprises a receiving module configured to receive, via the application interface, a confirmation of the commenced transaction.

An advantage of some embodiments is that the vehicle user receives a confirmation of the commenced transaction so that no unintentional purchase is completed without the vehicle user's confirmation.

Any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is flowchart illustrating example method steps according to some embodiments;
Figure 1b is a flowchart illustrating example method steps according to some embodiments;
Figure 2a is a schematic overview illustrating an example environment according to some embodiments;
Figure 2b is a schematic overview illustrating an example environment according to some embodiments;
Figure 3 is a schematic block diagram illustrating an example arrangement according to some embodiments; and
Figure 4 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where alternative approaches to payment of purchases are provided.

It is assumed that each vehicle comprises its own unique digital identification which may be connected to a user specific application.

Further, it is assumed that each vehicle comprises an image sensor arranged on the vehicle capable of reading a data code.

Moreover, it is assumed that a vehicle user may comprise any one of a vehicle occupant, a driver of a vehicle, a passenger of a vehicle, and a remote vehicle user in control of an autonomous vehicle.

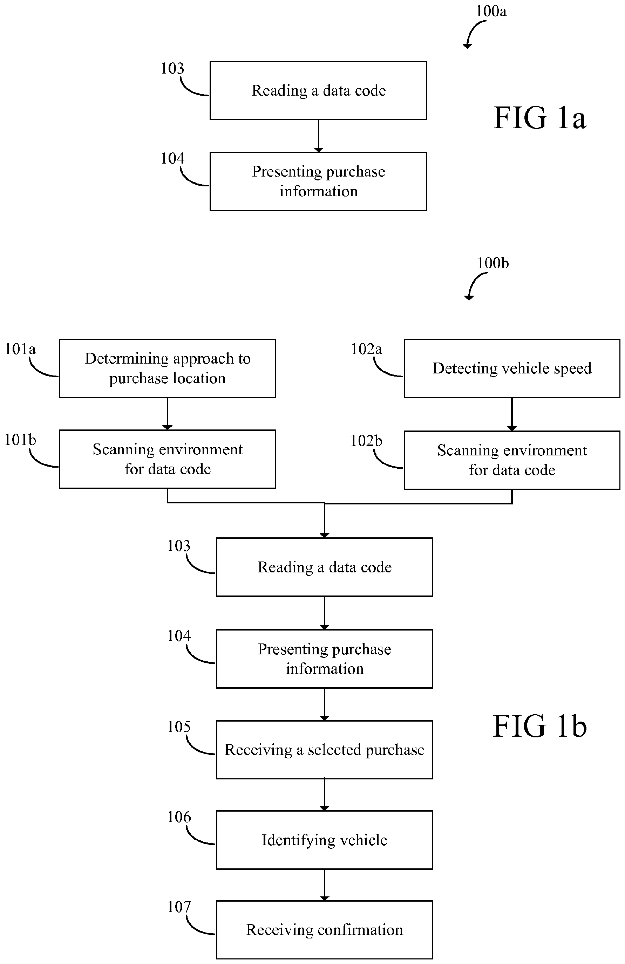

Figure 1a is a flowchart illustrating example method steps according to some embodiments.

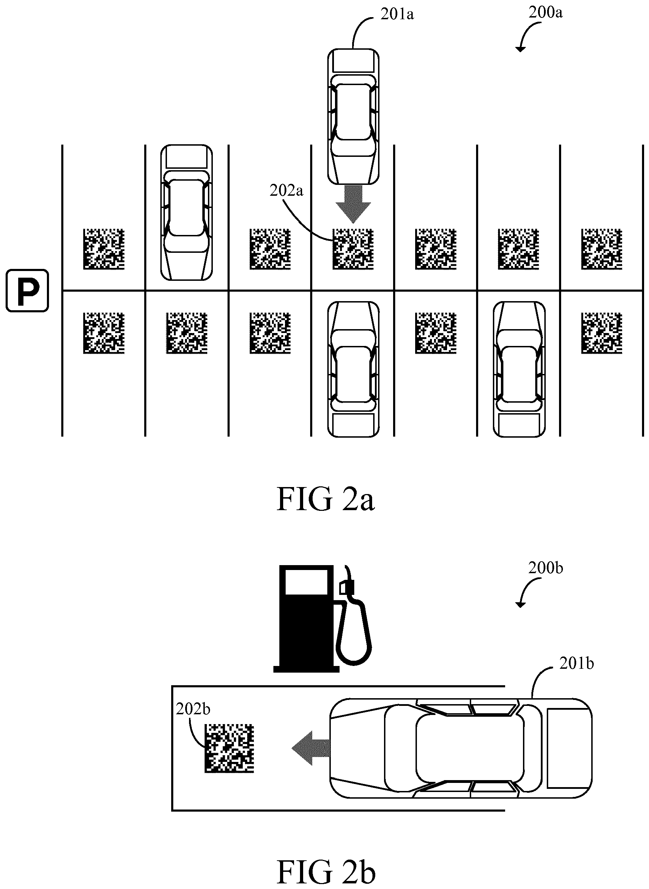

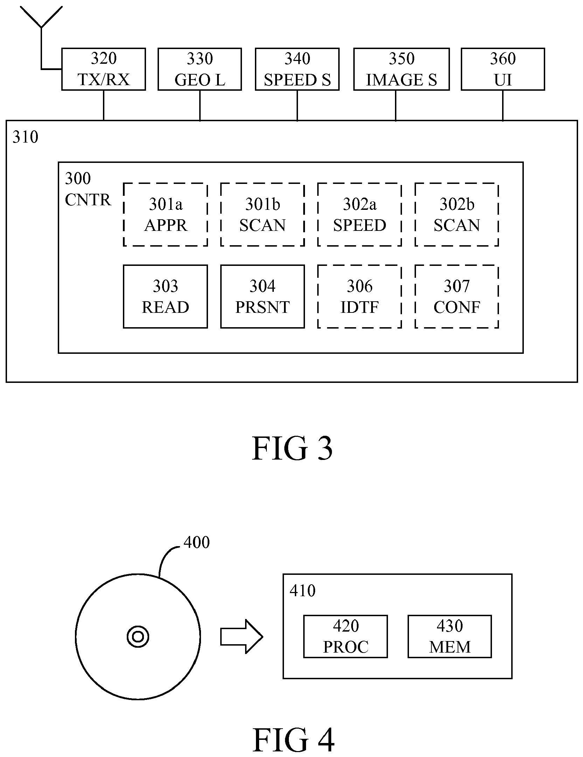

The method 100a is for payment of purchases in a vehicle. Thus, the method 100a may, for example, be performed by an arrangement 300 of Figure 3 and/or a computer program 400 of Figure 4 in environments of Figure 2a and 2b.

In step 103, a data code at a given purchase location, is read, by an image sensor arranged on a vehicle, which data code is associated to purchase information for the purchase location.

For example, the data code may be associated to purchase information for the purchase location e.g. the data code may comprise information on what server to contact in order to process the purchase i.e. to negotiate the payment of the purchase e.g. amount, payment method etc.

In step 104, the purchase information is presented for a vehicle user, via an application interface, for selection of a purchase in response to reading the data code.

For example, the purchase information, e.g. type of parking be it short time parking or long time parking etc., may be presented for the vehicle user, via an application interface on e.g. a mobile communication device or in the Human Machine Interface (HMI) of the vehicle, for selection of a purchase.

Hence, the method allows a vehicle user to complete the purchase without stepping out of the vehicle.

Figure 1b is a flowchart illustrating example method steps according to some embodiments.

The method 100b is for payment of purchases in a vehicle. Thus, the method 100b may, for example, be performed by an arrangement 300 of Figure 3 and/or a computer program 400 of Figure 4 in environments of Figure 2a and 2b.

In step 101a, in some embodiments, it is determined, via a geolocation system, that a vehicle approaches a geographic area of a purchase location.

For example, the geolocation system may determine that the vehicle is approaching a geographic area comprising a parking environment e.g. a parking lot.

In step 101b, in some embodiments, an environment for the data code is scanned, by the image sensor, when the vehicle enters the geographic area of the purchase location.

For example, the geolocation system may determine that the vehicle has entered the parking lot and the scanning of the environment for the data code is commenced.

In step 102a, in some embodiments, a vehicle speed is detected.

For example, the vehicle speed may be detected in order to determine that the vehicle user is in the process of approaching a parking space of the parking lot comprising the data code.

In step 102b, in some embodiments, the environment for the data code is scanned, by the image sensor, when the detected vehicle speed is lower than a set threshold.

For example, the scanning of the data code may be commenced when the detected vehicle speed is lower than a set threshold e.g. 5 km/h.

In step 103, the data code at the given purchase location, is read, by an image sensor arranged on the vehicle, which data code is associated to purchase information for the purchase location.

For example, the data code may be associated to purchase information for the purchase location e.g. the data code may comprise information on what server to contact in order to process the purchase i.e. to negotiate the payment of the purchase e.g. amount, payment method etc.

In step 104, the purchase information is presented for a vehicle user, via an application interface, for selection of a purchase in response to reading the data code.

For example, the purchase information, e.g. type of parking be it short time parking or long time parking etc., may be presented for the vehicle user, via an application interface on e.g. a mobile communication device or in the Human Machine Interface (HMI) of the vehicle, for selection of a purchase.

In step 105, in some embodiments, a selected purchase from the purchase information is received via the application interface.

For example, a short time parking purchase may be selected via the application interface by the vehicle user.

In step 106, in some embodiments, the vehicle is identified for the purchase location so that a transaction may be commenced for the selected purchase.

For example, the vehicle user may identify the vehicle with its unique digital identification

In step 107, in some embodiments, a confirmation of the commenced transaction is received via the application interface.

For example, the vehicle user may be asked to confirm the purchase i.e. the transaction e.g. pre-confirm payment for parking.

Alternatively or additionally, the vehicle user may be presented with more options for the vehicle user to select from e.g. when ordering specific food or specific quality of fuel.

Other types of purchases are also comprised e.g. electric charging, both wired and inductive, and wash services wherein the data code is arranged on the route of the wash service.

In some embodiments, the application interface comprises an application interface for a user application in a mobile communication device or an application interface for a user application in the vehicle.

In some embodiments, the image sensor comprises a camera sensor or a laser scanner.

In some embodiments, the data code comprises a two-dimensional, 2D, data matrix, a one-dimensional, 1D, data matrix, a bar code or a Quick Response, QR, code.

Other data codes which are capable of being detected by an image sensor and being associated to purchase information for a purchase location may also be used accordingly.

In some embodiments, the purchase comprises a purchase for any one of parking, gas, and toll charges.

Hence, the method comprises any kind of purchase which allows a vehicle user to complete the purchase without stepping out of the vehicle.

Figure 2a is a schematic overview illustrating an example environment according to some embodiments.

The methods 100a,100b of Figures la,lb may, for example, be performed by an arrangement 300 of Figure 3 and/or a computer program 400 of Figure 4 in an environment as described in connection with Figure 2a.

The environment 200a comprises a parking environment comprising a plurality of parking spaces for parking of vehicles. The environment 200a further comprises a vehicle 201a in the process of parking in a parking space comprising a data code 202a.

The vehicle 201a comprises its own unique digital identification which is connected to a user specific application of the vehicle user in the vehicle 201a.

Further, the vehicle 201a comprises an image sensor, e.g. a front camera scanner, arranged on the vehicle capable of reading the data code 202a.

The image sensor is comprised in an arrangement 300 for payment of purchases in a vehicle.

The image sensor arranged on the vehicle 201a is configured to read the data code 202a at a given purchase location, i.e. in the parking space comprising the data code 202a in the environment 200a, which data code 202a is associated to purchase information for the purchase location.

In response to the reading of the data code 202a by the image sensor in the arrangement 300, the arrangement 300 is further configured to present the purchase information, e.g. type of parking be it short time parking or long time parking etc., for a vehicle user, via an application interface on e.g. a mobile communication device or in the HMI, of the vehicle, for selection of a purchase.

The data code 202a comprised in the parking space may comprise e.g. a 2D data matrix painted on the ground of parking space so that a vehicle 201a can park in the parking space and have the data code 202a in front and/or beneath the vehicle 201a.

The data code 202a further comprises information on what server to contact in order to process a purchase i.e. to negotiate the payment of the purchase e.g. amount, payment method etc.

The vehicle user may open a user specific application and automatically connect with or manually enter the unique digital identification of the vehicle 201a. This connection may also be performed for a shared vehicle e.g. when booking a shared vehicle.

The user specific application may comprise one or more stored payment methods e.g. Swish, Alipay or credit/debit cards configured by the specific vehicle user and configured for purchases in environments as 200a.

When the vehicle 201a approaches the parking space i.e. the vehicle 201a travels slower than a set threshold, the image sensor e.g. the front camera scanner captures images of the parking space in front of it so that the data code may be read.

Once the data code is read, it is decoded and the vehicle user is asked to confirm the purchase i.e. the transaction e.g. pre-confirm payment for parking or similar standardized charges.

Further, the purchase information may comprise a range of options e.g. time limited parking etc.

Hence, the vehicle user is not required to step out of the vehicle 201a for payment of parking.

Figure 2b is a schematic overview illustrating an example environment according to some embodiments.

The methods 100a,100b of Figures la,lb may, for example, be performed by an arrangement 300 of Figure 3 and/or a computer program 400 of Figure 4 in an environment as described in connection with Figure 2b.

The environment 200b comprises a fuel station environment comprising a fuel space for fuelling of vehicles. The environment 200b further comprises a vehicle 201b in the process of approaching the fuel space comprising a data code 202b.

The vehicle 201b comprises its own unique digital identification which is connected to a user specific application of the vehicle user in the vehicle 201b.

Further, the vehicle 201b comprises an image sensor, e.g. a front camera scanner, arranged on the vehicle capable of reading the data code 202b.

The image sensor is comprised in an arrangement 300 for payment of purchases in a vehicle.

The image sensor arranged on the vehicle 201b is configured to read the data code 202b at a given purchase location, i.e. in the fuel space comprising the data code 202b in the environment 200b, which data code 202b is associated to purchase information for the purchase location.

In response to the reading of the data code 202b by the image sensor in the arrangement 300, the arrangement 300 is further configured to present the purchase information, e.g. type of fuel etc., for a vehicle user, via an application interface on e.g. a mobile communication device or in the HMI, of the vehicle, for selection of a purchase.

The data code 202b comprised in the fuel space may comprise e.g. a 2D data matrix painted on the ground of parking space so that a vehicle 201b can temporarily park in the fuel space and have the data code 202b in front and/or beneath the vehicle 201b.

The data code 202b further comprises information on what server to contact in order to process a purchase i.e. to negotiate the payment of the purchase e.g. amount, payment method etc.

The vehicle user may open a user specific application and automatically connect with or manually enter the unique digital identification of the vehicle 201b. This connection may also be performed for a shared vehicle e.g. when booking a shared vehicle.

The user specific application may comprise one or more stored payment methods e.g. Swish, Alipay or credit/debit cards configured by the specific vehicle user and configured for purchases in environments as 200b.

When the vehicle 201b approaches the fuel space i.e. the vehicle 201b travels slower than a set threshold, the image sensor e.g. the front camera scanner captures images of the fuel space in front of it so that the data code may be read.

Once the data code is read, it is decoded and the vehicle user is asked to confirm the purchase i.e. the transaction e.g. pre-confirm payment for fuelling or similar standardized charges.

Further, the purchase information may comprise a range of options e.g. choice of fuels etc.

Hence, the vehicle user is not required to step out of the vehicle 201b for payment of fuelling.

Figure 3 is a schematic block diagram illustrating an example arrangement according to some embodiments.

The arrangement 300 is for payment of purchases in a vehicle. Thus, the arrangement 300 may, for example, perform the methods 100a,100b of Figures la,lb in environments of Figure 2a and 2b.

The arrangement comprises a memory comprising executable instructions, one or more processors configured to communicate with the memory wherein the one or more processors are configured to cause the arrangement to read, by an image sensor arranged on the vehicle, a data code at a given purchase location, which data code is associated to purchase information for the purchase location.

The one or more processors are further configured to cause the arrangement to present the purchase information for a vehicle user, via an application interface, for selection of a purchase in response to reading the data code.

In some embodiments, the one or more processors are further configured to cause the arrangement to receive, via the application interface, a selected purchase from the purchase information.

In some embodiments, the one or more processors are further configured to cause the arrangement to identify the vehicle for the purchase location so that a transaction may be commenced for the selected purchase.

In some embodiments, the one or more processors are further configured to cause the arrangement detect a vehicle speed, and scan, by the image sensor, an environment for the data code when the detected vehicle speed is lower than a set threshold.

In some embodiments, the one or more processors are further configured to cause the arrangement to determine, via a geolocation system, that the vehicle approaches a geographic area of the purchase location, and scan, by the image sensor, the environment for the data code when the vehicle enters the geographic area of the purchase location.

In some embodiments, the one or more processors are further configured to cause the arrangement to receive, via the application interface, a confirmation of the commenced transaction.

The arrangement 300 may be comprised in a vehicle 201a, 201b described in connection with Figures 2a and 2b for payment of purchases.

The arrangement 300 is configured to be associated or operatively connected with a transmitting/receiving arrangement TX/RX 320 e.g. transceiver circuitry, configured to transmit and receive radio signals and a geo location arrangement GEO L 330, e.g. geo location circuitry or geo location module, configured to determine, via a geolocation system, the location of the vehicle.

The arrangement 300 is further configured to be associated or operatively connected with a speed sensor arrangement SPEED S 340 e.g. speed sensor circuitry or speed sensor module, configured to detect the speed of the vehicle and an image sensor arrangement IMAGE S 350 e.g. image sensor circuitry or image sensor module, configured to capture images in proximity of the vehicle.

The arrangement 300 is furthermore configured to be associated or operatively connected with a user interface arrangement UI 360 e.g. user interface circuitry or user interface module, configured to present information to the vehicle user.

The arrangement 300 comprises a reading arrangement READ 303, e.g. reading circuitry or reading module, configured to read a data code of which data code is associated to purchase information for a purchase location, and a presenting arrangement PRSNT 304 e.g. presenting circuitry or presenting module, configured to present the purchase information for a vehicle user, via an application interface, in response to reading the data code.

The arrangement 300 further comprises, in some embodiments, an approaching arrangement APPR 301a, e.g. approaching circuitry or approaching module, configured to determine, via a geolocation system, that the vehicle approaches a geographic area of the purchase location, and a scanning arrangement SCAN 301b e.g. scanning circuitry or scanning module, configured to scan the environment for the data code when the vehicle enters the geographic area of the purchase location.

The arrangement 300 further comprises, in some embodiments, a speed detecting arrangement SPEED 302a e.g. speed detecting circuitry or speed detecting module, configured to detect a vehicle speed lower than a set threshold, and a scanning arrangement SCAN 302b e.g. scanning circuitry or scanning module, configured to scan the environment for the data code when the detected vehicle speed is lower than the set threshold.

The arrangement 300 furthermore comprises, in some embodiments, an identifying arrangement IDTF 306 e.g. identifying circuitry or identifying detecting module, configured to identify the vehicle for the purchase location so that a transaction may be commenced for the selected purchase, and a confirming arrangement CONF 307 e.g. confirming circuitry or confirming module, configured to confirm the commenced transaction.

Figure 4 is a schematic drawing illustrating an example computer readable medium according to some embodiments. The computer program product comprises a non-transitory computer readable medium 400 having thereon a computer program comprising program instructions, wherein the computer program being loadable into a data processing unit and configured to cause execution of the method steps of any of the methods described in connection with Figure 1 or otherwise described herein.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a vehicle 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figure 1 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for payment of purchases in a vehicle, the method comprising the following steps:
reading (103), by an image sensor arranged on the vehicle, a data code at a given purchase location, which data code is associated to purchase information for the purchase location, and
presenting (104) the purchase information for a vehicle user, via an application interface, for selection of a purchase in response to reading the data code.

2. The method according to claim 1, further comprising the step of:
receiving (105), via the application interface, a selected purchase from the purchase information.

3. The method according to any of claims 1-2, further comprising the step of:
identifying (106) the vehicle for the purchase location so that a transaction may be commenced for the selected purchase.

4. The method according to any of claims 1-3, further comprising the steps of:
detecting (102a) a vehicle speed, and
scanning (102b), by the image sensor, an environment for the data code when the detected vehicle speed is lower than a set threshold.

5. The method according to any of claims 1-4, further comprising the steps of:
determining (101a), via a geolocation system, that the vehicle approaches a geographic area of the purchase location, and
scanning (101b), by the image sensor, the environment for the data code when the vehicle enters the geographic area of the purchase location.

6. The method according to any of claims 1-5, further comprising the step of:
receiving (107), via the application interface, a confirmation of the commenced transaction.

7. A computer program product comprising a non-transitory computer readable medium, having thereon a computer program comprising program instructions, the computer program being loadable into a data processing unit and configured to cause execution of the method according to any of claims 1 through 6 when the computer program is run by the data processing unit.

8. An arrangement for payment of purchases in a vehicle, the arrangement comprising:
a memory comprising executable instructions, one or more processors configured to communicate with the memory wherein the one or more processors are configured to cause the arrangement to:
read, by an image sensor arranged on the vehicle, a data code at a given purchase location, which data code is associated to purchase information for the purchase location, and
present the purchase information for a vehicle user, via an application interface, for selection of a purchase in response to reading the data code.

9. The arrangement according to claim 8, wherein the one or more processors are configured to further cause the arrangement to:
receive, via the application interface, a selected purchase from the purchase information.

10. The arrangement according to any of claims 8-9, wherein the one or more processors are configured to further cause the arrangement to:
identify the vehicle for the purchase location so that a transaction may be commenced for the selected purchase.

11. The arrangement according to any of claims 8-10, wherein the one or more processors are configured to further cause the arrangement to:
detect a vehicle speed, and
scan, by the image sensor, an environment for the data code when the detected vehicle speed is lower than a set threshold.

12. The arrangement according to any of claims 8-11, wherein the one or more processors are configured to further cause the arrangement to:
determine, via a geolocation system, that the vehicle approaches a geographic area of the purchase location, and
scan, by the image sensor, the environment for the data code when the vehicle enters the geographic area of the purchase location.

13. The arrangement according to any of claims 8-12, wherein the one or more processors are configured to further cause the arrangement to:
receive, via the application interface, a confirmation of the commenced transaction.

14. A vehicle (201a,201b) comprising the arrangement according to any of claims 8-13.

15. A system for payment of purchases in a vehicle, the system comprising:
a reading module (303) configured to read, by an image sensor arranged on the vehicle, a data code at a given purchase location, which data code is associated to purchase information for the purchase location, and
a presenting module (304) configured to present the purchase information for a vehicle user, via an application interface, for selection of a purchase in response to reading the data code.
